# EUROPEAN PATENT SPECIFICATION

(11) **EP 0 528 404 B1**
(45) Date of publication and mention of the grant of the patent: **14.05.1997**
(21) Application number: 92114077.8
(22) Date of filing: 18.08.1992
(51) Int. Cl.: H04R 3/00

(54) **Audio signal reproducing device**
Wiedergabeeinrichtung von Audiosignalen
Dispositif de reproduction de signaux auditifs

(30) Priority: 20.08.1991 JP 232403/91
(43) Date of publication of application: 24.02.1993
(73) Proprietor: SONY CORPORATION, Tokyo 141 (JP)
(72) Inventor: Nanbu, Takafumi, Shinagawa-ku, Tokyo (JP); Sasaki, Tsuyoshi, Shinagawa-ku, Tokyo (JP); Ogihara, Akira, Shinagawa-ku, Tokyo (JP)
(74) Representative: Melzer, Wolfgang, Dipl.-Ing.

(56) References cited:
- EP-A- 0 036 230
- EP-A- 0 410 157
- EP-A- 0 459 506
- DE-A- 3 027 953

## Description

### BACKGROUND OF THE INVENTION

This invention relates to an audio signal reproducing device and is more particularly suitable for an application to, such as a portable type tape reproducer.

In conventional portable type tape reproducers there are some therewith people can enjoy musics personally by using earphones.

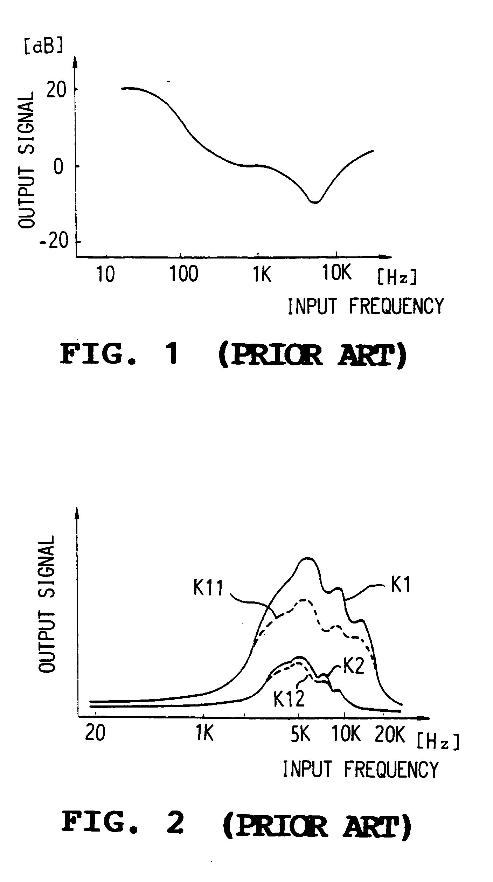

In this type of tape reproducer, as shown in Fig. 1, sound leakage from the earphone can be prevented by suppressing high frequency sounds.

However, as shown in Fig. 1, in case of suppressing only high frequency sounds, the deterioration in sound quality cannot be avoided. And accordingly, there occurs a problem, such as the music is unpleasant to the ear.

And if the level of sound is increased excessively, sound leakage may occur accordingly.

One of the methods to obviate such problems, as shown in Fig. 2, is to detect the level of sound (as shown characteristics K1 and K2) and to suppress the part where the level of sound is high (as shown characteristics K11 and K12).

However, heretofore, even with this method the sound leakage could not be avoided perfectly. If the level of sound was increased in the tape reproducer proper, the sound leakage could not be avoided.

### SUMMARY OF THE INVENTION

In view of the foregoing, an object of this invention is to provide a reproducing device capable of preventing the decline in sound quality in advance and effectively avoiding the sound leakage from earphones.

The foregoing object and other objects of the invention have been achieved by the provision of an audio signal reproducing device which comprises amplifiers 12, 14, 16, 18, 20, 22, 24 and 26 for amplifying the reproducing signals to be obtained from the prescribed recording medium 6; earphones 28 and 30 for reproducing the output signals of amplifiers 12, 14, 16, 18, 20, 22, 24 and 26; signal level detection circuits 32, 34, 36, 38, 40, 42, 43, 44, 46, 50, 52, 54 and 58 for detecting signal level of medium to high frequency sounds regarding input signals of earphones 28 and 30; and gain control circuits 56, 60, 62, 64 and 66 for controlling gains of amplifiers 12, 14, 16, 18, 20, 22, 24 and 26; and suppresses entire frequency range of signal level of the input signal when the sound volume of medium to high frequency sounds of the input signal is high.

Regarding the input signals of the earphones 28 and 30, the signal level of medium to high frequency is detected and when the sound volume of medium to high frequency sounds is high depending on the detected result thereof, the deterioration in sound quality can be effectively avoided and also sound leakage from earphones can be prevented by suppressing the signal level.

The nature, principle and utility of the invention will become more apparent from the following detailed description when read in conjunction with the accompanying drawings in which like parts are designated by like reference numerals or characters.

### BRIEF DESCRIPTION OF THE DRAWINGS

In the accompanying drawings:
Fig. 1 is a characteristic curvilinear diagram illustrating the prevention of sound leakage of the prior art;
Fig.2 is a characteristic curvilinear diagram illustrating the other means for preventing sound leakage of the prior art.
Fig. 3 is a block diagram illustrating a tape reproducer according to one embodiment of the present invention;
Fig. 4 is a characteristic curvilinear diagram showing its input/output characteristic; and
Fig. 5 is a characteristic curvilinear diagram showing its frequency characteristic.

### DETAILED DESCRIPTION OF THE INVENTION

Preferred embodiments of this invention will be described with reference to the accompanying drawings:

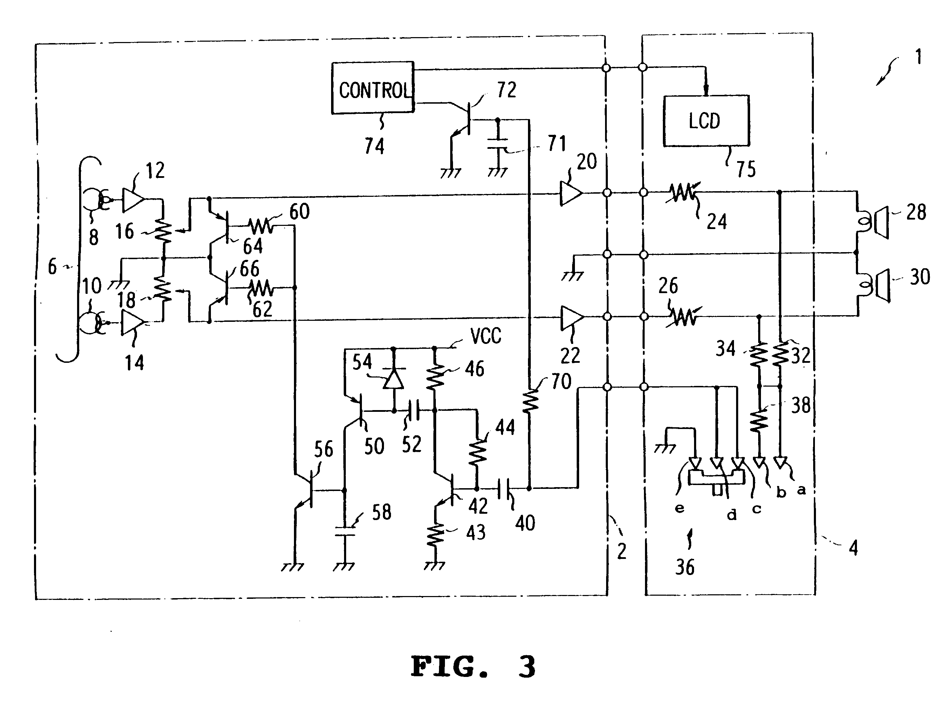

Designated generally at 1, in Fig. 3 is a tape reproducer, and the function of the tape reproducer 1 is changed by operating a controller 4 which is connected to the tape reproducer body 2.

More specifically, in the tape reproducer body 2, a magnetic tape 6 runs with the prescribed speed and the audio signal recorded on the magnetic tape 6 will be reproduced.

As a consequence, in the tape reproducer body 2, reproducing signals to be obtained from the magnetic heads 8 and 10 are amplified at the head amplifiers 12 and 14 and then are supplied to the amplifiers 20 and 22 via the sound level adjusting volumes 16 and 18 and are amplified by the prescribed gains and supplied to the controller 4.

In the controller 4, the output signals of amplifiers 20 and 22 are supplied outputted to the stereo type earphones 28 and 30 via sub sound level adjusting volumes 24 and 26.

Thus, in the tape reproducer 1, music can be enjoyed with desired level of sound by adjusting the sound level adjusting volumes 16 and 18 and the level of sound can be easily adjustable by operating the sub sound level adjusting volumes 24 and 26 of the controller 4 as occasion demands.

Furthermore, in the controller 4, the input signals of the earphones 28 and 30 are added via the resistances 32 and 34, and supplied to the connecting point a of the slide switch 36.

Here, the slide switch 36 is adapted to change the connecting point in three steps by slide operating the operation switch, and also to connect the connecting point a and b with the resistance 38, and to connect the connecting point c and d, and to earth the connecting point e.

Thus, the slide switch 36 maintains the signal level of the output signal at the zero level by supplying the output signal of the connecting point c to the tape reproducer body 2, on the condition that the connecting points c and e are short circuited; on the other hand, it feedbacks the input signals of the earphones 28 and 30 via the resistances 32, 34 and 38, on the condition that the connecting points b and d are short circuited.

Furthermore, the slide switch 36 feedbacks the input signals of the earphones 28 and 30 to the tape reproducer body 2 via the resistances 32 and 34 on the condition that the connecting points a and c are short circuited.

With this arrangement, in said tape reproducer 1, the signal level regarding the input signals of the earphones 28 and 30 can be detected directly, and then the detected level can be changed by operating the slide switch 36.

In the tape reproducer body 2, the output signal of the slide switch 36 is supplied to the transistor 42 via the capacitor 40 and is obtained upon suppressing the low-frequency range.

Here, the transistor 42 is constituted by the emitter grounded circuit having the emitter resistance 43, and connects between the collector and the base with the resistance 44 and also the electric power source VCC will be supplied via the collector resistance 46.

On the other hand, the transistor 50 receives the collector output of the transistor 42 upon suppressing the low-frequency range via the capacitor 52, and said corrector output will be full-wave rectified at the diode 54 connected between the base and the emitter.

Accordingly, in the transistor 50, regarding the input signals of the earphones 28 and 30, the signal level will be detected with medium to high frequency of higher than 1 kHz.

The transistor 56 is adapted to input the collector output of the transistor 50 to the base and also to ground the base at the capacitor 58.

Moreover, the transistor 56 is adapted to ground the emitter and also to connect the collector to the transistors 64 and 66 via the resistances 60 and 62.

Here, the transistors 64 and 66 are connected to the sound level adjusting volumes 16 and 18, and thus the signal level can be varied corresponding to the changes of base voltage in regards to the output signals of the sound level adjusting volumes 16 and 18.

Accordingly, in the tape reproducer 1, when the connecting points c and e are selected in the slide switch 36, the earphones 28 and 30 will be actuated by the signal level determined at the sound level adjusting volumes 16 and 18 and sub sound level adjusting volumes 24 and 26.

On the other hand, when the connecting points b and d are selected in the slide switch 36, the input signals of the earphones 28 and 30 will be feedbacked as much level of feedbacks as determined by the resistances 34 and 38. And the transistors 64 and 66 will be controlled depending on the level of said feedbacks thereof, and thus the sound level of the earphones 28 and 30 will be suppressed depending on the sound level of medium to high frequency of the reproducing signal. Here, the earphone output is controlled to not exceed 95 dB in signal level.

Furthermore, when the connecting points a and c are selected in the slide switch 36, the input signals of the earphones 28 and 30 will be feed backed as much level of feedbacks as determined by the resistances 32 and 34, and accordingly, the sound level of the earphones 28 and 30 will be further suppressed as compared with the case of selecting the connecting points b and e. Here, the earphone output is controlled to not exceed 85 dB in signal level.

With this arrangement, in the tape reproducer 1, the sound leakage from the earphones 28 and 30 can be effectively avoided by selecting the connecting point of the slide switch 36.

At this time, in the embodiment described above, in case of operating the volumes 16 and 18 of the tape reproducer body 2 side, the level of sound suppressing function can be steadily sustained by detecting the signal level directly regarding the input signals of the earphones 28 and 30, and thus the sound leakage can be prevented.

Moreover, the occurrence of the hearing disorders can be effectively avoided as well as preventing the sound leakage.

Furthermore, at this time, the level of sound can be decreased without harming the frequency characteristic of reproducing signal by controlling the transistors 64 and 66, and accordingly, the deterioration in sound quality of the tape reproducer 1 can be effectively avoided.

Moreover, at this moment, regarding the input signals of the earphones 28 and 30, even in case of reproducing with emphasis on low sounds, the level of sounds can be decreased only when necessary by the present invention relates to a reproducing device, e.g., in the portable tape reproducer, the deterioration in sound quality is prevented in advance and the sound leakage will be effectively avoided.

Moreover, at this moment, regarding the input signals of the earphones 28 and 30, even in case of reproducing with emphasis on low sounds, the level of sounds can be decreased only when necessary by detecting the signal level of medium to high frequency sounds and suppressing the level of sounds. And accordingly, the usability of the tape reproducer 1 can be remarkably improved.

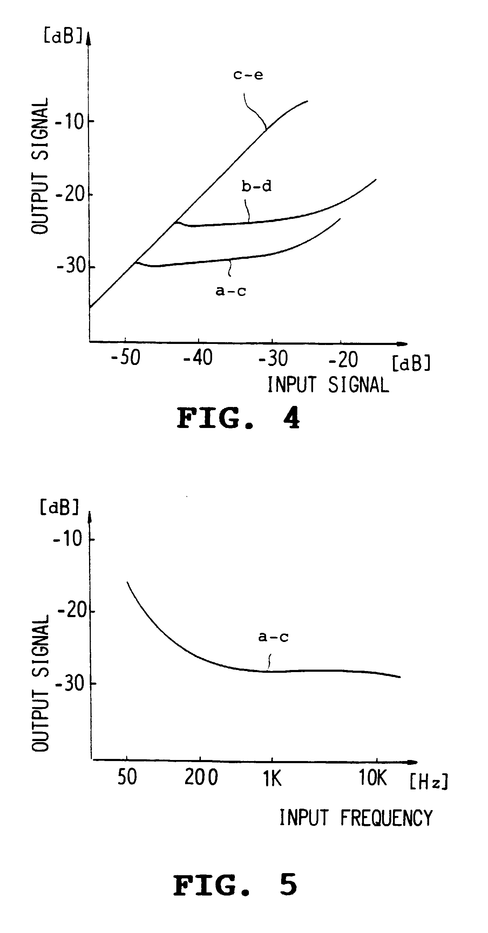

As shown in Figs. 4 and 5, according to an experiment, we confirmed that in case of suppressing the level of sound by operating the slide switch 36, the deterioration in sound quality can be effectively avoided and thereby the level of sound can be suppressed.

Furthermore, according to the embodiment discussed above, since the slide switch 36 for the level of sound suppressing is installed in the controller 4, operation can be switched easily at hand whenever necessary, and accordingly, the usability of the tape reproducer 1 can be improved.

Moreover, in the tape reproducer body 2, the output signal of the slide switch 36 is transmitted to the transistor 72 via the resistance 70 and the capacitor 71, and thus the shifting information of the slide switch 36 will be supplied to the control circuit 74 via the transistor 72.

The control circuit 74 shift controls the overall function of the tape reproducer 1 corresponding to the operation of, such as, a reproducing operation switch (not shown in Fig. 1) and drives a liquid crystal display unit 75 which is installed in the controller 4, depending on the shifting information of the slide switch 36.

Thus, in the tape reproducer 1, the condition of the sound volume suppressing function can be confirmed by eye through the controller 4, and the usability of the tape reproducer 1 can be improved.

According to the foregoing construction, the reproducing signals to be obtained from the magnetic heads 8 and 10 are adjusted to the prescribed level of sound at the sound level adjusting volumes 16 and 18 via the amplifiers 12 and 14 and then supplied to the earphones 28 and 30 via the amplifiers 20 and 22 and sub sound level adjusting volumes 24 and 26.

At this time, the input signals of the earphones 28 and 30 are supplied to the transistor 42 via the resistances 32 and 34 and the slide switch 36, and after the low frequency range band is suppressed herein, full-wave rectified at the diode 54, then the signal level of medium to high frequency sounds will be detected via the transistor 50.

The detected result of said signal level is supplied to the transistors 64 and 66 via the transistor 56 and thus the sound level of reproducing signal will be suppressed.

According to the foregoing construction, regarding the input signals of the earphones 28 and 30, the signal level of medium to high frequency sounds will be detected directly and by suppressing the signal level of said input signals depending on the detected result thereof, the level of sound can be suppressed without fail effectively avoiding the deterioration in sound quality.

The embodiment discussed above has dealt with the case of applying the present invention to the tape reproducer equipped with the controller. However, the present invention is not only limited to the above, but also suitably applied to the tape reproducer which is adapted that the volume of sound can be adjusted only by the side of the tape reproducer body.

Furthermore, the embodiment discussed above has dealt with the case of only suppressing the signal level. However, the present invention is not only limited to the above, but also frequency characteristic may be corrected at the same time.

Moreover, the embodiment discussed above has dealt with the case of applying the present invention to the tape reproducers. However, the present invention is not only limited to the tape reproducers, but also widely applicable to the reproducing device which is adapted to test hearing by the earphone.

According to the foregoing invention, regarding the input signals of the earphones, the reproducing device which is capable of preventing the sound leakage by effectively avoiding the deterioration in sound quality, can be obtained after directly detecting the signal level of medium to high frequency sounds and by suppressing the signal level depending on the detected result.

While there has been described in connection with the preferred embodiments of the invention, it will be obvious to those skilled in the art that various changes and modification may be made therein without departing from the invention, and it is aimed, therefore, to cover in the appended claims all such changes and modifications as fall within the scope of the invention.

## Claims

1. An audio signal reproducing device, comprising:
an amplifier (12, 14; 20, 22) for amplifying reproducing signals to be obtained from a prescribed recording medium (6);
an earphone (28, 30) for reproducing output signals of said amplifier;
a signal level detection circuit (32-36) for detecting medium to high frequency sound signal level regarding input signals of said earphone; and
a signal level suppressing circuit (44-66) for suppressing the input signal of said earphone depending on the detected result of said signal level detection circuit, wherein:
said signal level suppressing circuit (44-66) suppresses the signal level of said input signal when medium to high frequency sound of said input signal is high.

2. The audio signal reproducing device according to claim 1, wherein said recording medium is a portable type tape reproducer (2).

3. The audio signal reproducing device according to claim 1 or 2, wherein said signal level detection circuit includes a switch (36) having a plurality of contacts through which suppressing signals are feedbacked to said signal level suppressing circuit so as to suppress said input signal level corresponding to the switching positions of said switch (36).

4. The audio signal reproducing device according to claim 3, wherein said switch (36) is a slide switch.

5. The audio signal reproducing device according to claim 4, wherein said slide switch (36) has first contact for not suppressing said input signal level and second contact for suppressing said input signal level to a predetermined suppressing level.

## Patentansprüche

1. Wiedergabevorrichtung für Audiosignale mit:
einem Verstärker (12, 14; 20, 22) zur Verstärkung der Wiedergabesignale, welche von einem vorher beschriebenen Aufzeichnungsmedium (6) erhalten worden sind;
einem Kopfhörer (28, 30) zur Wiedergabe der Ausgangssignale des Verstärkers;
einer Signalpegel-Detektionsschaltung (32-36) zur Feststellung eines mittleren bis hohen Tonfrequenz-Signalpegels, indem die Eingangspegel des Kopfhörers berücksichtigt werden; und
einer Signalpegel-Unterdrückungsschaltung (44-66) zur Unterdrückung des Eingangssignals des Kopfhörers, abhängig von dem Ergebnis der Signalpegel-Detektionsschaltung; wobei
die Signalpegel-Unterdrückungsschaltung (44-66) den Signalpegel des Eingangssignals unterdrückt, wenn die mittlere bis hohe Tonfrequenz des Eingangssignals hoch ist.

2. Wiedergabevorrichtung für Audiosignale nach Anspruch 1, bei welcher das Aufzeichnungsmedium ein tragbares Bandwiedergabegerät (2) ist.

3. Wiedergabevorrichtung für Audiosignale nach Anspruch 1 oder 2, bei welcher die Signalpegel-Detektionsschaltung einen Schalter (36) mit einer Vielzahl von Kontakten enthält, durch welche die Unterdrückungssignale zu der Signalpegel-Unterdrückungsschaltung rückgeführt werden, um den Eingangssignalpegel entsprechend den Schalterstellungen des Schalters (36) zu unterdrücken.

4. Wiedergabevorrichtung für Audiosignale nach Anspruch 3, bei welcher der Schalter (36) ein Schiebeschalter ist.

5. Wiedergabevorrichtung für Audiosignale nach Anspruch 4, bei welcher der Schiebeschalter (36) einen ersten Kontakt, um den Eingangssignalpegel nicht zu unterdrücken, und einen zweiten Kontakt, um den Eingangssignalpegel auf einen vorgegebenen Unterdrückungspegel zu unterdrücken, besitzt.

## Revendications

1. Dispositif de reproduction de signal audio comprenant :
un amplificateur (12, 14 ; 20, 22) pour amplifier des signaux de reproduction à obtenir à partir d'un support d'enregistrement prescrit (6) ;
un écouteur (28, 30) pour reproduire des signaux de sortie dudit amplificateur ;
un circuit de détection de niveau de signal (32-36) pour détecter un niveau de signal de son des fréquences intermédiaires aux hautes fréquences concernant des signaux d'entrée dudit écouteur ; et
un circuit d'atténuation de niveau de signal (44-66) pour atténuer le signal d'entrée dudit écouteur en fonction du résultat détecté dudit circuit de détection de niveau de signal,
dans lequel :
ledit circuit d'atténuation de niveau de signal (44-66) atténue le niveau de signal dudit signal d'entrée lorsqu'un son des fréquences intermédiaires aux hautes fréquences dudit signal d'entrée est élevé.

2. Dispositif de reproduction de signal audio selon la revendication 1, dans lequel ledit support d'enregistrement est un dispositif de reproduction à bande du type portable (2).

3. Dispositif de reproduction de signal audio selon la revendication 1 ou 2, dans lequel ledit circuit de détection de niveau de signal inclut un commutateur (36) comportant une pluralité de contacts par l'intermédiaire desquels des signaux d'atténuation sont appliqués en retour sur ledit circuit d'atténuation de niveau de signal de manière à atténuer ledit niveau de signal d'entrée correspondant aux positions de commutation dudit commutateur (36).

4. Dispositif de reproduction de signal audio selon la revendication 3, dans lequel ledit commutateur (36) est un commutateur à glissière.

5. Dispositif de reproduction de signal audio selon la revendication 4, dans lequel ledit commutateur à glissière (36) comporte un premier contact pour ne pas atténuer ledit niveau de signal d'entré et un second contact pour atténuer ledit niveau de signal d'entrée jusqu'à un niveau d'atténuation prédéterminé.
